# EUROPEAN PATENT APPLICATION

(11) **EP 4 579 851 A1**
(43) Date of publication of application: **02.07.2025**
(21) Application number: 23857035.2
(22) Date of filing: 18.07.2023
(51) Int. Cl.: H01M 10/0567, H01M 4/131, H01M 4/36, H01M 4/38, H01M 4/485, H01M 4/505, H01M 4/525, H01M 4/587, H01M 10/052

(54) **NON-AQUEOUS ELECTROLYTE SECONDARY BATTERY**

(30) Priority: 23.08.2022 JP 2022132727
(71) Applicant: Panasonic Intellectual Property Management Co., Ltd., Kadoma-shi, Osaka 571-0057 (JP)
(72) Inventor: TAKEDA Nanami, Kadoma-shi, Osaka 571-0057 (JP)
(74) Representative: Eisenführ Speiser
(86) International application number: PCT/JP2023/026230
(87) International publication number: WO 2024/042919

(57) **Abstract**

A nonaqueous electrolyte secondary battery includes a positive electrode, a negative electrode, and a nonaqueous electrolyte. The positive electrode includes a positive electrode active material. The positive electrode active material includes a lithium-containing composite oxide, and a sulfonic acid compound present on a surface of the lithium-containing composite oxide. The nonaqueous electrolyte contains a sulfur-containing compound.

## Description

### [Technical Field]

The present disclosure relates to a nonaqueous electrolyte secondary battery.

### [Background Art]

The application of nonaqueous electrolyte secondary batterie have been expanded in recent years to power sources for electric cars, power storage devices for utilizing natural energy, and the like. The characteristics required for the positive electrode active material used in nonaqueous electrolyte secondary batteries also change depending on the application.

Patent Literature 1 proposes a lithium titanate powder for an electrode of a power storage device. The lithium titanate powder is mainly composed of Li₄Ti₅O₁₂ and has a surface layer containing a lithium sulfonate compound having an alkyl group having 1 to 5 carbon atoms or an aryl group having 6 to 12 carbon atoms, on at least part of the particle surface.

### [Citation List]

### [Patent Literature]

Patent Literature 1: Japanese Laid-Open Patent Publication No. 2018-6164

### [Summary of Invention]

### [Technical Problem]

Patent Literature 1 aims to suppress the change in resistance before and after high-temperature charge storage for a long term of a power storage device. However, in terms of achieving high capacity and improving the charge-discharge cycle characteristics of nonaqueous electrolyte secondary batteries, there is much room for improvement.

### [Solution to Problem]

One aspect of the present invention relates to a nonaqueous electrolyte secondary battery, including a positive electrode, a negative electrode, and a nonaqueous electrolyte, wherein the positive electrode includes a positive electrode active material, the positive electrode active material includes a lithium-containing composite oxide, and a sulfonic acid compound present on a surface of the lithium-containing composite oxide, and the nonaqueous electrolyte contains a sulfur-containing compound.

### [Advantageous Effects of Invention]

According to the present disclosure, it is possible to provide a nonaqueous electrolyte secondary battery that is advantageous for achieving high capacity and improving the charge-discharge cycle characteristics.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[Figure] A longitudinal sectional view of a nonaqueous electrolyte secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of."

Secondary batteries include at least nonaqueous electrolyte secondary batteries, such as lithium-ion batteries and lithium-metal secondary batteries.

The nonaqueous electrolyte secondary battery according to the present embodiment includes a positive electrode, a negative electrode, and a nonaqueous electrolyte. The positive electrode includes a positive electrode active material, and the positive electrode active material includes a lithium-containing composite oxide and a sulfonic acid compound present on a surface of the lithium-containing composite oxide.

Here, the surface of the lithium-containing composite oxide may be the surface of a secondary particle of the lithium-containing composite oxide, may be the surface of a primary particle, and may be the interface where primary particles contact each other. The lithium-containing composite oxide usually includes secondary particles each formed of agglomerated primary particles. That is, the sulfonic acid compound is present on at least one of the surface of a secondary particle, the surface of a primary particle, or the interface where primary particles contact each other of the lithium-containing composite oxide.

At least part of the sulfonic acid compound remains undissolved in the nonaqueous electrolyte, and maintains a solid state on the surface of the lithium-containing composite oxide. The sulfonic acid compound acts like a barrier that protects the surface of the lithium-containing composite oxide and suppresses side reactions involving the lithium-containing composite oxide and the nonaqueous electrolyte. The sulfonic acid compound can also suppress the increase in reaction resistance on the surface of the lithium-containing composite oxide.

Next, the nonaqueous electrolyte contains a sulfur-containing compound. At least part (usually the whole) of the sulfur-containing compound in the nonaqueous electrolyte is dissolved in the nonaqueous electrolyte, and therefore, can always act on the surface of the lithium-containing composite oxide. It is considered that not only by the presence of the sulfonic acid compound on the surface of the lithium-containing composite oxide, but also by the inclusion of the sulfur-containing compound in the nonaqueous electrolyte, a favorable surface condition that suppresses side reactions is formed on the lithium-containing composite oxide. For example, the sulfur-containing compound can act between the surface of the lithium-containing composite oxide and the sulfonic acid compound, or act on regions not covered with the sulfonic acid compound which are scattered in the form of particles. In that case, the surface condition of the lithium-containing composite oxide is similar to a condition in which a dense protective coating with low resistance is formed.

Even when the nonaqueous electrolyte contains a sulfur-containing compound, without the presence of the sulfonic acid compound on the surface of the lithium-containing composite oxide, it is difficult to obtain the effect of suppressing side reactions. This is presumably because the sulfur-containing compound cannot sufficiently act on the surface of the lithium-containing composite oxide.

On the other hand, when the nonaqueous electrolyte contains a sulfur-containing compound, and a sulfonic acid compound is present on the surface of the lithium-containing composite oxide, the sulfur-containing compound can act effectively on the surface of the lithium-containing composite oxide. As a result, side reactions are suppressed more remarkably than when only a sulfonic acid compound is used. In other words, the sulfur-containing compound in the nonaqueous electrolyte has an effect of enhancing the protection effect on the lithium-containing composite oxide by the sulfonic acid compound.

The sulfonic acid compound is in contact with the particle surface of the lithium-containing composite oxide. The sulfonic acid compound may cover at least part of the particle surface of the lithium-containing composite oxide. The sulfonic acid compound may be attached to or deposited on the particle surface of the lithium-containing composite oxide. The sulfonic acid compound may form particles smaller than those of the lithium-containing composite oxide, or may form an island-like film covering at least part of the particle surface of the lithium-containing composite oxide.

In the following, the nonaqueous electrolyte secondary battery according to the present disclosure will be more specifically described for each constituent element.

### [Positive electrode]

The positive electrode includes a positive electrode current collector, and a positive electrode mixture layer provided on a surface of the positive electrode current collector. The positive electrode current collector is constituted of a sheet-like conductive material. The positive electrode mixture layer is supported on one or both surfaces of the positive electrode current collector. The positive electrode mixture layer is usually a layer or film constituted of a positive electrode mixture. The thickness of the positive electrode mixture layer is, for example, 10 µm to 150 µm per one side of the positive electrode current collector. The positive electrode mixture contains a positive electrode active material as an essential component. The positive electrode active material includes a lithium-containing composite oxide, and a sulfonic acid compound present on the surface of the lithium-containing composite oxide.

The positive electrode mixture layer may contain a conductive agent, as an optional component. Examples of the conductive agent include carbon-based materials, such as carbon black (CB), acetylene black (AB), Ketjen black, carbon nanotubes (CNTs), graphene, and graphite. These may be used singly or in combination of two or more kinds.

The positive electrode mixture layer may contain a binder. Examples of the binder include fluorine-based resins, such as polytetrafluoroethylene (PTFE) and polyvinylidene fluoride (PVDF), polyacrylonitrile (PAN), polyimide-based resins, acrylic resins, and polyolefin-based resins. These may be used singly or in combination of two or more kinds.

As the positive electrode current collector, a non-porous conductive substrate (metal foil etc.), or a porous conductive substrate (mesh, net, punched sheet, etc.) is used. Examples of the material of the positive electrode current collector include aluminum, aluminum alloy, titanium, and titanium alloy.

### (Sulfonic acid compound)

The sulfonic acid compound is an organic compound having a sulfonic acid group (SO₃H), or an organic compound having a salt of the sulfonic acid group. The sulfonic acid compound may be a monosulfonic acid compound having only one sulfonic acid group (SO₃H), may be a disulfonic acid compound having two sulfonic acid groups, and may be a polysulfonic acid compound having three or more sulfonic acid groups. The cation of the salt of the sulfonic acid group may have a valence of one, or two or more. The sulfonic acid compound may be used singly or in combination of two or more kinds.

The sulfonic acid compound is represented by, for example, a general formula (I):

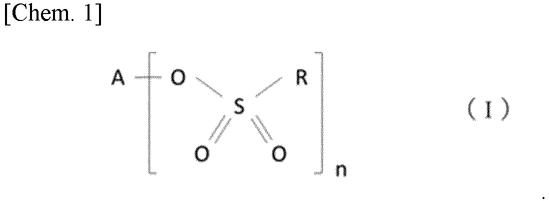

In the general formula (I), A is a Group I element or a Group II element. In particular, the A is preferably a Group I element, more preferably Li. In this case, the surface condition of the lithium-containing composite oxide falls into a lower resistance state, and the output characteristics can also be improved. When the A is a Group I element, n = 1.

In the general formula (I), R is a hydrocarbon group, and is preferably an alkyl group. The R may be an alkyl group having 5 or less carbon atoms, or an alkyl group having 3 or less carbon atoms, but is preferably a methyl group. In addition, in the R, part of the hydrogen bonded to carbon may be substituted by fluorine. However, in the R, not all the hydrogen bonded to carbon is substituted by fluorine. The smaller the molecular weight of the R is, the smaller the reaction resistance can be.

Specific examples of the sulfonic acid compound include lithium methanesulfonate, lithium ethanesulfonate, lithium propanesulfonate, sodium methanesulfonate, magnesium methanesulfonate, and lithium fluoromethanesulfonate.

The amount of the sulfonic acid compound present on the surface of the lithium-containing composite oxide may be, for example, 0.1 mass% or more and 1 mass% or less, and may be 0.3 mass% or more and 0.8 mass% or less, relative to the mass of the lithium-containing composite oxide.

The presence of the sulfonic acid compound on the surface of the lithium-containing composite oxide can be confirmed by Fourier transform infrared spectroscopy (FT-IR). In an infrared absorption spectrum obtained by FT-IR, the positive electrode active material may have an absorption peak at or around at least one of the following positions of 1238 cm⁻¹, 1175 cm⁻¹, 1065 cm⁻¹, and 785 cm⁻¹.

In an infrared absorption spectrum obtained by FT-IR, for example, a positive electrode active material containing lithium methanesulfonate has an absorption peak at or around 1238 cm⁻¹, 1175 cm⁻¹, 1065 cm⁻¹, and 785 cm⁻¹. The peaks at or around 1238 cm⁻¹, 1175 cm⁻¹, and 1065 cm⁻¹ are absorption peaks attributed to the SO stretching vibration derived from lithium methanesulfonate. The peak at or around 785 cm⁻¹ is an absorption peak attributed to the CS stretching vibration derived from lithium methanesulfonate.

In a positive electrode active material containing a sulfonic acid compound other than lithium methanesulfonate, too, as in the positive electrode active material containing lithium methanesulfonate, an absorption peak derived from the sulfonic acid compound contained in the positive electrode active material can be identified. The presence of the sulfonic acid compound on the surface of the lithium-containing composite oxide can be confirmed also by ICP, atomic absorption spectrometry, X-ray photoelectron spectroscopy (XPS), synchrotron radiation XRD measurement, TOF-SIMS, and the like.

The average particle diameter of the particulate sulfonic acid compound is, for example, 100 µm or less, may be 50 µm or less, may be 30 µm or less, and may be 15 µm or less. In this case, the sulfonic acid compound can be more uniformly attached to the whole positive electrode active material powder, and the effect of the sulfonic acid compound can be more remarkably exhibited. The lower limit value of the average particle diameter of the sulfonic acid compound is, for example, 1 µm.

The average particle diameter of the sulfonic acid compound can be determined by observing the sulfonic acid compound present on the surface of the lithium-containing composite oxide with a SEM. Specifically, the outer shapes of 50 randomly selected particles are identified, and the major axis (longest axis) of each of the 50 particles is obtained. An average value of them is determined as the average particle diameter of the sulfonic acid compound.

### (Lithium-containing composite oxide)

The particle diameter of the primary particle constituting the secondary particle of the lithium-containing composite oxide is, for example, 0.02 µm to 20 µm. The particle diameter of the primary particle is measured as a diameter of the circumscribed circle in a particle image observed with a scanning electron microscope (SEM). The average particle diameter of the secondary particles of the lithium-containing composite oxide is, for example, 20 µm to 300 µm. Here, the average particle diameter means a volume-based median diameter (D50). D50 means a particle diameter at which the cumulative volume from the small particle diameter side reaches 50% in a volume-based particle size distribution. The particle size distribution of the secondary particles of the lithium-containing composite oxide can be measured using a laser diffraction-type particle size distribution analyzer (e.g., MT3000II available from MicrotracBEL Corporation), with water used as a dispersion medium.

The lithium-containing composite oxide may have a layered rock-salt structure. The layered rock-salt structure may belong to, for example, the space group R-3m, the space group C2/m, or the like. In particular, a layered rock-salt structure belonging to the space group R-3m is preferred in terms of high capacity and high stability of the crystal structure. The layered rock-salt structure of the lithium-containing composite oxide may include a transition metal layer, a Li layer, and an oxygen layer.

In view of achieving high capacity, the ratio of Ni (Ni content) in the metal elements other than Li contained in the lithium-containing composite oxide may be set to 50 atom% or more, may be set to 80 atom% or more, and may be set to 90 atom% or more.

In view of stabilizing the crystal structure of the lithium-containing composite oxide and improving the heat resistance of the battery, the ratio of Co (Co content) in the metal elements other than Li contained in the lithium-containing composite oxide may be set to 0 atom% or more, and may be set to 1.5 atom% or more. The Co content may be set to 20 atom% or less, may be set to 16 atom% or less, and may be set to 10 atom% or less.

Likewise, in view of stabilizing the crystal structure of the lithium-containing composite oxide and improving the heat resistance of the battery, the ratio of Al (Al content) in the metal elements other than Li contained in the lithium-containing composite oxide may be set to 0 atom% or more, may be set to 3.5 atom% or more, and may be set to 4 atom% or more. The Al content may be set to 18.5 atom% or less, and may be set to 10 atom% or less.

In view of cost reduction, the ratio of Mn (Mn content) in the metal elements other than Li contained in the lithium-containing composite oxide may be set to 0 atom% or more, and may be set to 5 atom% or more. The Mn content may be set to 50 atom% or less, may be set to 30 atom% or less.

The content ratio of each metal element contained in the lithium-containing composite oxide is measured by, for example, inductively coupled plasma (ICP) emission spectrometry.

The lithium-containing composite oxide may be, for example, a composite oxide represented by a general formula LiₐNiₓCo_{y}Al_{z}M1_{w}O_{2-b}, where 0.8 ≤ a ≤ 1.2, 0.615 ≤ x ≤ 0.95, 0.015 ≤ y ≤ 0.20, 0.035 ≤ z ≤ 0.185, 0 ≤ w ≤ 0.145, 0 ≤ b < 0.05, x+y+z+w = 1, and M1 is at least one element selected from Mn, Fe, Ti, Si, Nb, Zr, Mo, and Zn. In this case, M1 is preferably Mn.

Next, an example of a method for producing a positive electrode active material according to the present embodiment will be described. The method for producing a positive electrode active material includes, for example, a synthesis step, a washing step, a drying step, and an addition step.

In the synthesis step, a transition metal oxide and a Li compound are mixed together, and fired, to obtain a lithium-containing composite oxide.

The transition metal oxide can be obtained by, for example, dropping an alkaline solution, such as sodium hydroxide, into a solution of a metal salt containing a metal element, such as Ni, Co, Al, or Mn, under stirring, to adjust the pH to the alkaline side (e.g., 8.5 to 12.5), so that a composite hydroxide precipitates (co-precipitates), and then, heat-treating the composite hydroxide. The heat treatment temperature is not particularly limited, but is, for example, in the range of 300 °C to 600 °C.

The Li compound may be, for example, Li₂CO₃, LiOH, Li₂O₂, Li₂O, LiNO₃, LiNO₂, Li₂SO₄, LiOH·H₂O, LiH, LiF, and the like. The mixing ratio between the metal oxide and the Li compound is preferably such that the molar ratio of the metal elements except Li to Li, for example, is in the range of 1:0.98 to 1:1.1. When mixing the transition metal oxide and the Li compound, another metal raw material may be added as necessary. Here, another metal raw material includes an oxide containing a metal element other than the metal element constituting the transition metal oxide.

The mixture of the transition metal oxide and the Li compound is fired, for example, in an oxygen atmosphere. The firing conditions may be such that a temperature-raising rate is at more than 1.0 °C/min and 5.5 °C/min or less in the range of 450 °C or higher and 680 °C or lower, and the maximum temperature reached is in the range of 700 °C or higher and 850 °C or lower. A temperature-raising rate from above 680 °C to the maximum temperature reached may be set to, for example, 0.1 °C/min to 3.5 °C/min. The holding time of the maximum temperature reached may be 1 hour or more and 10 hours or less. This firing step may be multi-stage firing, in which a first temperature-raising rate and a second temperature-raising rate may be each set in plural for respective temperature regions, as long as they are within the ranges specified above.

In the washing step, the lithium-containing composite oxide obtained in the synthesis step is washed with water, and dehydrated, into a cake-like composition. The washing with water and dehydration can be performed by a known method and under known conditions. This step is performed within a range in which no lithium will be leached out from the lithium-containing composite oxide, causing no deterioration in battery characteristics. Note that since the positive electrode active material according to the present embodiment has been washed with water, the amount of remaining alkaline components is small.

In the drying step, the cake-like composition obtained in the washing step is dried. The drying step may be performed in a vacuum atmosphere. The drying conditions are, for example, at 150 °C to 400 °C and for 0.5 hours to 15 hours.

In the addition step, to the cake-like composition obtained in the washing step or the composition obtained in the drying step, at least one of a sulfonic acid compound and a solution (e.g., an aqueous solution) of sulfonic acid is added, for example. This can allow a sulfonic acid compound to attach to the surface of the lithium-containing composite oxide. It is preferable to add at least one of a sulfonic acid compound and a solution of sulfonic acid to the cake-like composition. In the cake-like composition, the Li compound remains, and the remaining Li compound is dissolved in the water contained in the cake-like composition. Therefore, even when a solution of sulfonic acid is added, a sulfonic acid compound containing Li is formed. The amount of the sulfonic acid compound added is preferably 0.1 mass% to 1 mass%, more preferably 0.3 mass% to 0.8 mass%, relative to the mass of the lithium-containing composite oxide. The concentration of the sulfonic acid solution is, for example, 0.5 mass% to 40 mass%.

A raw material of a metal compound containing one or more metal elements selected from the group consisting of Sr, Ca, W, Zr, rare earth elements, and Al, and a raw material of a non-metal compound containing one or more non-metal elements selected from the group consisting of P and B may be added, for example, in any of the followings: during the synthesis step, after the synthesis step, during the washing step, after the washing step, during the drying step, after the drying step, and during the addition step. This can allow a metal compound containing one or more metal elements selected from the group consisting of Sr, Ca, W, Zr, rare earth elements, and Al, and a non-metal compound containing one or more non-metal elements selected from the group consisting of P and B to attach to the surface of the lithium-containing composite oxide.

Examples of the Sr raw material include Sr(OH)₂, Sr(OH)₂·8H₂O, SrO, SrCO₃, SrSO₄, Sr(NO₃)₂, SrCl₂, and SrAlO₄. Examples of the Ca raw material include Ca(OH)₂, CaO, CaCO₃, CaSO₄, Ca(NO₃)₂, CaCl₂, and CaAlO₄. Examples of the Zr raw material include Zr(OH)₄, ZrO₂, Zr(CO₃)₂, and Zr(SO₄)₂·4H₂O. Examples of the rare earth element raw material include oxides, hydroxides, and carbonates of rare earth elements. Examples of the W raw material include tungsten oxide (WO₃), and lithium tungstate (Li₂WO₄, Li₄WO₅, and Li₆W₂O₉). As the W raw material, a solution containing W may be used. The Al raw material may be Al₂O₃, Al(OH)₃, Al₂(SO₄)₃, and the like, but may be Al derived from the lithium-containing composite oxide. Examples of the P raw material include Li₃₋ₓHₓPO₄ where 0 ≤ x ≤ 3. Examples of the B raw material include H₃BO₃, Li₃BO₃, and Li₂B₄O₇.

### [Negative Electrode]

The negative electrode includes at least a negative electrode current collector, and may have a negative electrode mixture layer provided on a surface of the negative electrode current collector. The negative electrode current collector is constituted of a sheet-like conductive material. The negative electrode mixture layer is supported on one or both surfaces of the negative electrode current collector. The negative electrode mixture layer is usually a layer or film constituted of a negative electrode mixture. The thickness of the negative electrode mixture layer is, for example, 10 µm to 150 µm per side of the negative electrode current collector. The negative electrode mixture contains a negative electrode active material as an essential component, and may contain, as optional components, a binder, a conductive agent, a thickener, and the like. The binder, the conductive agent, and the thickener may be known materials.

The negative electrode active material includes a material that electrochemically absorbs and releases lithium ions, lithium metal, lithium alloy, and the like. As the material that electrochemically absorbs and releases lithium ions, a carbon material, an alloy-type material, and the like are used. Examples of the carbon material include graphite, graphitizable carbon (soft carbon), and non-graphitizable carbon (hard carbon). In particular, graphite is preferred in terms of its excellent stability during charging and discharging and small irreversible capacity. The alloy-type material is a material that contains at least one metal capable of forming an alloy with lithium. As such a material, silicon, tin, a silicon alloy, a tin alloy, a silicon compound can be used. Silicon oxide, tin oxide, and the like may also be used.

As the alloy-type material containing silicon, for example, a silicon-containing material including a lithium-ion conductive phase and silicon phases dispersed in the lithium-ion conductive phase is preferably used.

The lithium-ion conductive phase may be, for example, a silicon oxide phase, a silicate phase, a carbon phase, and the like. The major component of the silicon oxide phase (e.g., 95 to 100 mass%) can be silicon dioxide. The silicate phase is preferred in that the irreversible capacity is small. In particular, a silicate phase containing lithium (hereinafter sometimes referred to as a lithium silicate phase) can be preferably used as a lithium-ion conductive phase which is excellent in initial charge-discharge efficiency.

The lithium silicate phase is an oxide phase containing lithium (Li), silicon (Si), and oxygen (O), and may contain another element. The atomic ratio O/Si of O to Si in the lithium silicate phase is, for example, more than 2 and less than 4. Preferably, the O/Si is more than 2 and less than 3. The atomic ratio Li/Si of Li to Si in the lithium silicate phase is, for example, more than 0 and less than 4. The lithium silicate phase can have a composition represented by a formula: Li_{2z}SiO_{2+z}, where 0 < z < 2. The symbol z preferably satisfies 0 < z < 1, and z = 1/2 is more preferred. Examples of the elements other than Li, Si, and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be constituted of, for example, formless carbon with low crystallinity (i.e., amorphous carbon). The formless carbon may be, for example, hard carbon, soft carbon, or others.

As the negative electrode active material, a silicon-containing material and a carbon material may be used in combination. The silicon-containing material expands and contracts in volume during charging and discharging. Therefore, when the ratio thereof in the negative electrode active material increases, contact failure between the negative electrode active material and the negative electrode current collector tends occur in association with charging and discharging. On the other hand, by using a silicon-containing material in combination with a carbon material, it is possible to achieve excellent cycle characteristics, while imparting high capacity to the negative electrode.

The ratio of the silicon-containing material in the total of the silicon-containing material and the carbon material is, for example, preferably 0.5 to 15 mass%, more preferably 1 to 10 mass%. This makes it easier to achieve high capacity as well as to improve the cycle characteristics.

As the negative electrode current collector, a non-porous conductive substrate (metal foil, etc.) and a porous conductive substrate (mesh, net, punched sheet, etc.) are used. Examples of the material of the negative electrode current collector include stainless steel, nickel, nickel alloy, copper, and copper alloy.

### [Nonaqueous electrolyte]

The nonaqueous electrolyte contains a nonaqueous solvent and a solute dissolved in the nonaqueous solvent. The solute includes, for example, a lithium salt. The components of the nonaqueous electrolyte other than the nonaqueous solvent and the solute are additives. The nonaqueous electrolyte can contain various additives.

In the present disclosure, among the additives, especially, a sulfur-containing compound is used as an essential component. The nonaqueous electrolyte may contain the sulfur-containing compound singly, or in combination of two or more kinds.

When the nonaqueous electrolyte contains a sulfur-containing compound, a highly flexible solid electrolyte interface (SEI) is formed on the surface of the negative electrode active material. The highly flexible SEI can easily follow the expansion and contraction of the negative electrode associated with charging and discharging. It is considered therefore that even after repeated charging and discharging, the decrease in capacity can be suppressed, and excellent cycle characteristics can be obtained.

The sulfur-containing compound desirably has one or more sulfonyl groups (-S(=O)₂-), and may have one or more fluorosulfonyl groups (F-S(=O)₂-). For example, the sulfur-containing compound may contain fluorosulfonic acid or a fluorosulfonic acid salt. Preferred among fluorosulfonic acid salts is lithium fluorosulfonate.

The sulfur-containing compound may be at least one selected from the group consisting of a sulfuric acid ester, a sulfurous acid ester, a sulfonic acid ester, and a sulfonylimide compound.

The sulfuric acid ester has a -O-S(=O)₂-O- structure. The sulfuric acid ester may be cyclic or chain, or may form a salt. As the sulfuric acid ester, a C₂₋₄ alkyl sulfate is preferred. Specific examples thereof include ethylene sulfate, propylene sulfate, trimethylene sulfate, butylene sulfate, vinylene sulfate, ethyl sulfate, and methyl sulfate.

The sulfurous acid ester has a -O-S(=O)-O- structure. The sulfurous acid ester may be cyclic or chain, or may form a salt. As the sulfurous acid ester, a C₂₋₄ alkylene sulfite is preferred. Specific examples thereof include ethylene sulfite (ES), propylene sulfite, trimethylene sulfite, butylene sulfite, and vinylene sulfite.

The sulfonic acid ester has a -S(=O)₂-O- structure. The sulfonic acid ester may be cyclic or chain, or may form a salt. As the sulfonic acid ester, at least one selected from the group consisting of a C₃₋₅ alkane sultone and a C₃₋₅ alkene sultone is preferred. In particular, a cyclic sulfonic acid ester is desirable. Specific examples thereof include 1,3-propane sultone, 1,4-butane sultone, and 1,3-propene sultone.

As the sulfonylimide compound, an imide salt can be used. Examples of the imide salt include lithium bisfluorosulfonylimide (LiN(FSO₂)₂), lithium bistrifluoromethanesulfonyl imide (LiN(CF₃SO₂)₂), lithium trifluoromethanesulfonyl nonafluorobutanesulfonyl imide (LiN(CF₃SO₂)(C₄F₉SO₂)), and lithium bispentafluoroethanesulfonyl imide (LiN(C₂F₅SO₂)₂). The nonaqueous electrolyte may contain the imide salt singly, or in combination of two or more kinds.

In the sulfur-containing compound, one or two or more hydrogen atoms of the compounds exemplified above may be replaced with a substituent. Examples of the substituent include an alkyl group, a hydroxyalkyl group, a hydroxy group, an alkoxy group, and a halogen atom. The number of carbon atoms in the substituent may be 1 to 4 or 1 to 3. Examples of the halogen atom include a chlorine atom and a fluorine atom.

The content ratio of the sulfur-containing compound in the nonaqueous electrolyte is, for example, 0.01 mass% or more and 10 mass% or less. The content ratio of the sulfur-containing compound in the nonaqueous electrolyte may be 5 mass% or less, may be 3 mass% or less, and may be 2 mass% or less. The content ratio of the sulfur-containing compound in the nonaqueous electrolyte may be 0.1 mass% or more, and may be 0.5 mass% or more. When the content ratio of the sulfur-containing compound is in such a range, the viscosity of the nonaqueous electrolyte can be suppressed low, and the charge-discharge reactions can be allowed to proceed more uniformly.

Note that, in a nonaqueous electrolyte secondary battery, the content ratio of the sulfur-containing compound in the nonaqueous electrolyte changes during storage or during charge-discharge cycles. Therefore, it suffices when the sulfur-containing compound remains in the nonaqueous electrolyte collected from the nonaqueous electrolyte secondary battery at a concentration equal to or higher than the detection limit.

The nonaqueous electrolyte may contain another additive. Examples of such an additive include vinyl ethylene carbonate and cyclohexylbenzene.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

As the lithium salt, for example, a lithium salt of a chlorine-containing acid (LiClO₄, LiAlCl₄, LiB₁₀Cl₁₀, etc.), a lithium salt of a fluorine-containing acid (LiPF₆, LiPF₂O₂, LiBF₄, LiSbF₆, LiAsF₆, LiCF₃SO₃, LiCF₃CO₂, etc.), a lithium salt of a fluorine-containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.), and the like can be used. The lithium salt may be used singly or in combination of two or more kinds.

The lithium salt concentration in the nonaqueous electrolyte may be 1 mol/liter or more and 2 mol/liter or less, and may be 1 mol/liter or more and 1.5 mol/liter or less. By controlling the lithium salt concentration within the above range, an electrolyte solution having excellent ion conductivity and moderate viscosity can be obtained. The lithium salt concentration, however, is not limited to the above.

### [Separator]

It is desirable to interpose a separator between the positive electrode and the negative electrode. The separator is excellent in ion permeability and has moderate mechanical strength and electrically insulating properties. As the separator, a microporous thin film, a woven fabric, a nonwoven fabric, and the like can be used. The material of the separator is preferably a polyolefin, such as polypropylene and polyethylene.

### <Nonaqueous electrolyte secondary battery>

One example of the structure of the nonaqueous electrolyte secondary battery is a structure in which an electrode group formed by winding the positive electrode and the negative electrode with the separator interposed therebetween is housed in an outer body, together with the nonaqueous electrolyte. However, this is not a limitation, and another form of electrode group may be adopted. For example, a stacked electrode group formed by stacking the positive electrode and the negative electrode with the separator interposed therebetween may be used. The secondary battery may be in any form, such as cylindrical type, prismatic type, coin type, button type, and laminate type.

In the following, a structure of the nonaqueous electrolyte secondary battery will be described with reference to Figure. Figure is a longitudinal sectional view of a cylindrical secondary battery 10 which is an example of the present embodiment. The present disclosure, however, is not limited to the following configuration.

The secondary battery 10 includes an electrode group 18, an electrolyte (not shown), and a bottomed cylindrical battery can 22 housing them. A sealing assembly 11 is clamped onto the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a drawn out from the positive electrode 15 is connected to the metal plate 13. The valve body 12 thus functions as a positive external terminal. A negative electrode lead 16a drawn out from the negative electrode 16 is connected to the bottom inner surface of the battery can 22. An annular groove 22a is formed near the open end of the battery can 22. A first insulating plate 23 is placed between one end face of the electrode group 18 and the annular groove 22a. A second insulating plate 24 is placed between the other end face of the electrode group 18 and the bottom of the battery can 22. The electrode group 18 is formed by winding the positive electrode 15 and the negative electrode 16, with the separator 17 interposed therebetween.

In the following, the present disclosure will be specifically described with reference to Examples and Comparative Examples. The present disclosure, however, is not limited to the following Examples.

### <Examples 1 to 4>

A composite hydroxide represented by [Ni_{0.90}Co_{0.05}Al_{0.05}](OH)₂ obtained by coprecipitation was fired at 500 °C for 8 hours, to obtain a metal oxide (Ni_{0.90}Co_{0.05}Al_{0.05}O₂). Next, LiOH and the above metal oxide were mixed such that the molar ratio between Li and the total amount of Ni, Co, and Al was 1.03:1, to obtain a mixture. The mixture was fired from room temperature to 650 °C at a temperature-raising rate of 2.0 °C/min in an oxygen flow with an oxygen concentration of 95% (flow rates of 2 mL/min per 10 cm³ and 5 L/min per 1 kg of the mixture), and then, fired from 650 °C to 780 °C at a temperature-raising rate of 0.5 °C/min, to obtain a lithium-containing composite oxide (synthesis step).

To the lithium-containing composite oxide whose average particle diameter (D50) was adjusted to 10 µm, water was added such that the slurry concentration was 1500 g/L, followed by stirring for 15 minutes, and filtration, to obtain a cake-like composition (washing step).

To the cake-like composition, particulate lithium methanesulfonate having an average diameter of 30 µm was added (addition step). The amount of lithium methanesulfonate added was 0.5 mass%, relative to the mass of the lithium-containing composite oxide. After the addition step, a drying step was performed at 180 °C for 2 hours in a vacuum atmosphere, to obtain a positive electrode active material of Example 1.

Note that the presence of lithium sulfonate on the surface of the positive electrode active material was confirmed by Fourier transform infrared spectroscopy (FT-IR).

### [Positive electrode]

A positive electrode slurry was prepared by blending a positive electrode active material having lithium methanesulfonate on the surface, acetylene black serving as a conductive material, and polyvinylidene fluoride serving as a binder in a ratio of 98 parts by mass, 1 part by mass, 1 part by mass, respectively, followed by mixing, with N-methyl-2-pyrrolidone (NMP) used as a dispersion medium. The positive electrode slurry was applied onto both sides of a positive electrode current collector made of aluminum foil. After drying the applied film, the applied film was rolled with a rolling roller, and cut into a predetermined electrode size, to obtain a positive electrode having positive electrode mixture layers on both sides. An exposed portion where the surface of the positive electrode current collector was exposed was provided in a part of the positive electrode.

### [Negative electrode]

A 10:90 mass ratio mixture of a silicon-containing material and artificial graphite was used as a negative electrode active material. A negative electrode slurry was prepared by blending the negative electrode active material, sodium carboxymethylcellulose (CMC-Na), and styrene-butadiene rubber (SBR) in a ratio of 100 parts by mass, 1 part by mass, and 1 part by mass, respectively, followed by mixing, with water used as a dispersion medium. The negative electrode mixture slurry was applied onto both sides of a negative electrode current collector made of copper foil. After drying the applied film, the applied film was rolled with a rolling roller, and cut into a predetermined electrode size, to obtain a negative electrode having negative electrode mixture layers on both sides. An exposed portion where the surface of the negative electrode current collector was exposed was provided in a part of the negative electrode.

### [Preparation of nonaqueous electrolyte]

Ethylene carbonate (EC), ethyl methyl carbonate (EMC), and dimethyl carbonate (DMC) were mixed in a volume ratio of 3:3:4. To the resultant mixed solvent, lithium hexafluorophosphate (LiPF₆) was dissolved at a concentration of 1.2 mol/liter, to prepare a nonaqueous electrolyte. In the nonaqueous electrolyte, any one of the following sulfur-containing compounds was dissolved at a ratio of 0.5 mass%.

### (Lithium fluorosulfonate (LFS))

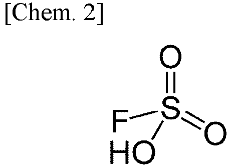

### (Methyl fluorosulfonate (MFS))

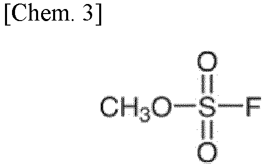

### (Propene sultone (PRES))

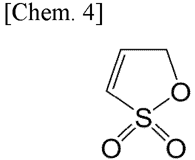

### (Propane sultone (PS))

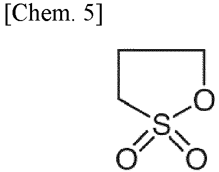

### [Fabrication of test cell]

With a positive electrode lead and a negative electrode lead attached respectively to the exposed portion of the positive electrode and to the negative electrode, the positive electrode and the negative electrode were spirally wound with a polyolefin separator interposed therebetween, which was then press-molded in the radial direction, to produce a flat wound electrode group. The electrode group was housed in an outer body constituted of an aluminum laminate sheet, and after the nonaqueous electrolyte was injected thereinto, the opening of the outer body was sealed, to obtain a test cell (batteries A1 to A4).

### [Evaluation]

In a 45°C environment, a constant-current charging was performed at a predetermined current until the voltage of the nonaqueous electrolyte secondary battery reached 4.2 V, and then, a constant-voltage charging was performed at 4.2 V. Subsequently, a constant-current discharging was performed at a predetermined current until the voltage of the nonaqueous electrolyte secondary battery reached 2.85 V. The rest time between charging and discharging was set to 20 minutes. With this cycle counted as one cycle, 300 cycles were repeated, and the discharge capacity at the 300th cycle was determined.

The discharge capacities of the batteries A1 to A4 are shown in Table 1, with the discharge capacity of a below-described battery B2 of Comparative Example 2 taken as 100%. The larger the numeral value in Table 1 is, the more excellent the charge-discharge cycle characteristics are.

**[Table 1]**

| battery | positive electrode active material | content ratio (mass%) | nonaqueous electrolyte | content ratio (mass%) | discharge capacity (Index) |
|---|---|---|---|---|---|
| A1 | Li methanesulfonate | 0.5 | LFS | 0.5 | 103 |
| A2 | Li methanesulfonate | 0.5 | MFS | 0.5 | 102 |
| A3 | Li methanesulfonate | 0.5 | PRES | 0.5 | 102 |
| A4 | Li methanesulfonate | 0.5 | PS | 0.5 | 102 |
| B1 | without | 0 | without | 0 | 98 |
| B2 | Li methanesulfonate | 0.5 | without | 0 | 100 |
| B3 | without | 0 | LFS | 0.5 | 98 |
| B4 | without | 0 | MFS | 0.5 | 98 |
| B5 | without | 0 | PRES | 0.5 | 98 |
| B6 | without | 0 | PS | 0.5 | 98 |

### <Comparative Example 1>

A battery B1 of Comparative Example 1 was prepared and evaluated in the same manner as in Example 1, except that lithium methanesulfonate was not added to the positive electrode active material, and lithium fluorosulfonate was not contained in the nonaqueous electrolyte.

### <Comparative Example 2>

A battery B2 of Comparative Example 2 was prepared and evaluated in the same manner as in Example 1, except that lithium fluorosulfonate was not contained in the nonaqueous electrolyte.

### <Comparative Examples 3 to 6>

Batteries B3 to B6 of Comparative Examples 3 to 6 were prepared and evaluated in the same manner as in Examples 1 to 4, except that lithium methanesulfonate was not added to the positive electrode active material.

Table 1 shows that when lithium methanesulfonate was not added to the positive electrode active material, the sulfur-containing compound contained in the nonaqueous electrolyte failed to exhibit the effect of improving the capacity retention rate.

On the other hand, when lithium methanesulfonate was added to the positive electrode active material, the sulfur-containing compound contained in the nonaqueous electrolyte exhibited a remarkable effect of improving the capacity retention rate.

### [Additional notes]

The present disclosure includes embodiments additionally noted below.
(1) A nonaqueous electrolyte secondary battery, comprising
   a positive electrode, a negative electrode, and a nonaqueous electrolyte, wherein
   the positive electrode includes a positive electrode active material,
   the positive electrode active material includes a lithium-containing composite oxide, and a sulfonic acid compound present on a surface of the lithium-containing composite oxide, and
   the nonaqueous electrolyte contains a sulfur-containing compound.
(2) The nonaqueous electrolyte secondary battery according to the above (1), wherein the sulfonic acid compound is represented by a general formula (I): 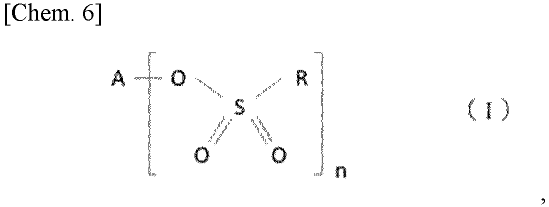 and in the general formula (I),
   A is a Group I element or a Group II element,
   R is a hydrocarbon group, and
   n is 1 or 2.
(3) The nonaqueous electrolyte secondary battery according to the above (1) or (2), wherein the A is a Group I element.
(4) The nonaqueous electrolyte secondary battery according to any one of the above (1) to (3), wherein the A is Li.
(5) The nonaqueous electrolyte secondary battery according to any one of the above (1) to (4), wherein the R is an alkyl group.
(6) The nonaqueous electrolyte secondary battery according to any one of the above (1) to (5), wherein the R is a methyl group.
(7) The nonaqueous electrolyte secondary battery according to any one of the above (1) to (6), wherein an amount of the sulfonic acid compound present on the surface of the lithium-containing composite oxide is 0.1 mass% or more and 1 mass% or less, relative to a mass of the lithium-containing composite oxide.
(8) The nonaqueous electrolyte secondary battery according to any one of the above (1) to (7), wherein a content ratio of the sulfur-containing compound in the nonaqueous electrolyte is 0.01 mass% or more and 10 mass% or less.
(9) The nonaqueous electrolyte secondary battery according to any one of the above (1) to (8), wherein the sulfur-containing compound has one or more sulfonyl groups.
(10) The nonaqueous electrolyte secondary battery according to any one of the above (1) to (9), wherein the sulfur-containing compound has one or more fluorosulfonyl groups.
(11) The nonaqueous electrolyte secondary battery according to any one of the above (1) to (10), wherein the sulfur-containing compound includes lithium fluorosulfonate.
(12) The nonaqueous electrolyte secondary battery according to any one of the above (1) to (11), wherein the sulfur-containing compound includes a cyclic sulfonic acid ester.
(13) The nonaqueous electrolyte secondary battery according to any one of the above (1) to (12), wherein in metal elements other than Li contained in the lithium-containing composite oxide, a ratio of Ni is 50 atom% or more, a ratio of Co is 0 atom% or more and 20 atom% or less, a ratio of Al is 0 atom% or more and 10 atom% or less, and a ratio of Mn is 0 atom% or more and 50 atom% or less.
(14) The nonaqueous electrolyte secondary battery according to any one of the above (1) to (13), wherein
   the negative electrode includes a negative electrode active material, and
   the negative electrode active material includes a carbon material, and a silicon-containing material.

### [Industrial Applicability]

The nonaqueous electrolyte secondary battery according to the present disclosure is useful as a main power source for mobile communication devices, electric cars, hybrid cars, portable electronic devices, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: nonaqueous electrolyte secondary battery, 11: sealing assembly, 12: valve body, 13: metal plate, 14: insulating member, 15: positive electrode, 15a: positive electrode lead, 16: negative electrode, 16a: negative electrode lead, 17: separator, 18: electrode group, 21: gasket, 22: battery can, 22a: annular groove, 23: first insulating plate, 24: second insulating plate.

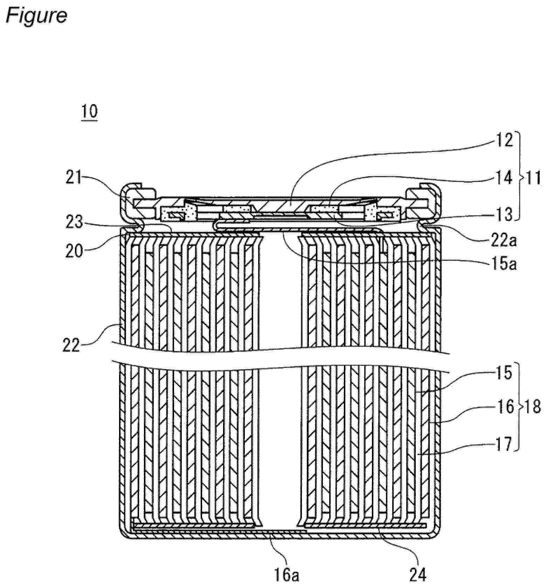

## Claims

1. A nonaqueous electrolyte secondary battery, comprising
a positive electrode, a negative electrode, and a nonaqueous electrolyte, wherein
the positive electrode includes a positive electrode active material,
the positive electrode active material includes a lithium-containing composite oxide, and a sulfonic acid compound present on a surface of the lithium-containing composite oxide, and
the nonaqueous electrolyte contains a sulfur-containing compound.

2. The nonaqueous electrolyte secondary battery according to claim 1, wherein the sulfonic acid compound is represented by a general formula (I): 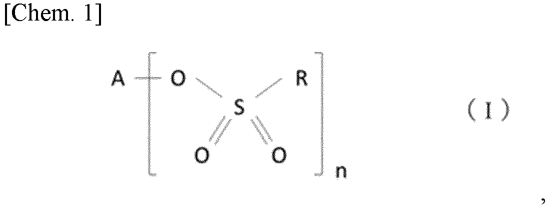 and in the general formula (I),
A is a Group I element or a Group II element,
R is a hydrocarbon group, and
n is 1 or 2.

3. The nonaqueous electrolyte secondary battery according to claim 1, wherein the A is a Group I element.

4. The nonaqueous electrolyte secondary battery according to claim 1, wherein the A is Li.

5. The nonaqueous electrolyte secondary battery according to claim 1, wherein the R is an alkyl group.

6. The nonaqueous electrolyte secondary battery according to claim 1, wherein the R is a methyl group.

7. The nonaqueous electrolyte secondary battery according to any one of claims 1 to 5, wherein an amount of the sulfonic acid compound present on the surface of the lithium-containing composite oxide is 0.1 mass% or more and 1 mass% or less, relative to a mass of the lithium-containing composite oxide.

8. The nonaqueous electrolyte secondary battery according to any one of claims 1 to 5, wherein a content ratio of the sulfur-containing compound in the nonaqueous electrolyte is 0.01 mass% or more and 10 mass% or less.

9. The nonaqueous electrolyte secondary battery according to any one of claims 1 to 5, wherein the sulfur-containing compound has one or more sulfonyl groups.

10. The nonaqueous electrolyte secondary battery according to any one of claims 1 to 5, wherein the sulfur-containing compound has one or more fluorosulfonyl groups.

11. The nonaqueous electrolyte secondary battery according to claim 10, wherein the sulfur-containing compound includes lithium fluorosulfonate.

12. The nonaqueous electrolyte secondary battery according to any one of claims 1 to 5, wherein the sulfur-containing compound includes a cyclic sulfonic acid ester.

13. The nonaqueous electrolyte secondary battery according to any one of claims 1 to 5, wherein in metal elements other than Li contained in the lithium-containing composite oxide, a ratio of Ni is 50 atom% or more, a ratio of Co is 0 atom% or more and 20 atom% or less, a ratio of Al is 0 atom% or more and 10 atom% or less, and a ratio of Mn is 0 atom% or more and 50 atom% or less.

14. The nonaqueous electrolyte secondary battery according to any one of claims 1 to 5, wherein
the negative electrode includes a negative electrode active material, and
the negative electrode active material includes a carbon material, and a silicon-containing material.
